(19) Europäisches Patentamt

European Patent Office

Office européen des brevets

(11) **EP 1 093 210 A2**

(12) **EUROPEAN PATENT APPLICATION**

(43) Date of publication:
**18.04.2001 Bulletin 2001/16**

(51) Int. Cl.⁷: **H02K 29/08**

(21) Application number: **00122557.2**

(22) Date of filing: **16.10.2000**

(84) Designated Contracting States:
**AT BE CH CY DE DK ES FI FR GB GR IE IT LI LU
MC NL PT SE**
Designated Extension States:
**AL LT LV MK RO SI**

(30) Priority: **15.10.1999 JP 29421199**

(71) Applicant:
**YAMAHA HATSUDOKI KABUSHIKI KAISHA
Iwata-shi Shizuoka-ken (JP)**

(72) Inventor:
**Taiken, Matsui,
c/o Yamaha Hatsudoki K.K.
Shizuoka-ken (JP)**

(74) Representative:
**Grünecker, Kinkeldey,
Stockmair & Schwanhäusser
Anwaltssozietät
Maximilianstrasse 58
80538 München (DE)**

(54) **Electrical driving apparatus**

(57) To continuously detect a position of a rotor of a motor having the rotor formed with a plurality of magnetic poles by permanent magnets without using an expensive encoder, the rotor position is continuously detected by arranging a rotor formed with, for example, 8 poles by permanent magnets, a stator having, for example, 9 slots of magnetic legs opposed to the rotor, an analog type Hall element arranged at a position opposed to the magnetic poles of the rotor, an analog type Hall sensor for outputting an analog magnetism detecting signal the phase of which is shifted by 90° from that of the analog type Hall sensor or a digital type Hall sensor for outputting a digital magnetism detecting signal comprising a binary signal and comparing the magnetism detecting signals having different phases by 90°.

FIGURE 3

FIGURE 1

EP 1 093 210 A2

Printed by Xerox (UK) Business Services
2.16.7 (HRS)/3.6

**Description**

The present invention relates to an electrical driving apparatus, in particular an apparatus of detecting a position of a rotor of a motor, said rotor having a plurality of poles of permanent magnets and a stator having magnetic legs wound with excitation coils opposed to the rotor.

Conventionally, according to an apparatus of detecting a position of a rotor used in, for example, a brushless DC motor, it is general to prevent out-of-phase by detecting a position of a magnetic pole of a rotor by applying a Hall sensor outputting a binary signal in correspondence with a magnetic pole of the rotor by utilizing the Hall effect produced in a semiconductor element and feeding back the detected position.

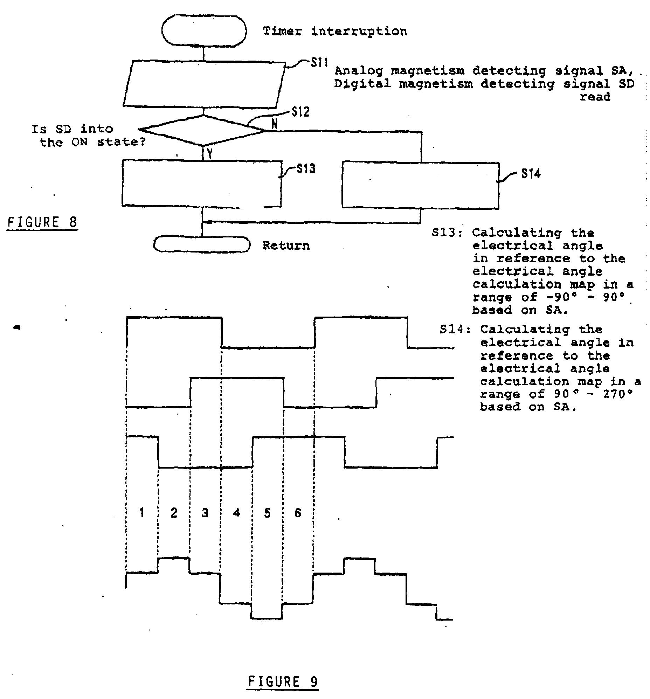

It is general to drive the brushless DC motor by 180° conducting three phase inverter having a phase of 120°. As current waveform, as shown by Fig. 9, there is constituted a 6 steps current waveform having a resolution of 180° / phase number in electrical angle and changed in a stepped shape at respective 60° in electrical angle by synthesizing magnet electrode signals having a phase difference of 120° outputted from three of digital type Hall sensors outputting binary signals. Since a change in the current is in the stepped shape and steep, there cause torque ripple and electromagnetic noise. Therefore, when the system is applied as a motor generating drive torque to, for example, a bicycle having assistant power, a wheel chair having assistant power, an electrical vehicle such as an electric scooter and a hybrid vehicle using both of an engine and a motor, there poses an unresolved problem that a rider feels a change in the torque.

Although in order to resolve the problem, it is conceivable to use an encoder having high resolution, the encoder is expensive and therefore, there poses a problem that the cost of a control apparatus driving the motor is increased.

Therefore, as previously described in Japanese Patent Laid-Open No. 201284/1998, the applicant has proposed a brushless DC motor in which magnetic flux generated from a magnetic electrode of a rotor of a brushless DC motor is detected as a magnetic pole position signal comprising binary signals by magnetic pole detecting means constituted by a Hall sensor, based on the binary signals, an edge signal representing an edge position of the magnetic pole is outputted by edge detecting means, an interval of the edge signal is detected by a resolution of a measuring clock by counter means, predetermined electrical angle is provided from a signal of a position of the magnetic pole, correction of electrical angle in a section of the electrical angle is carried out by an average speed of information of the edge signal actually provided under a condition of constant acceleration of the edge signal in the section and a time period until the electrical angle is changed by a predetermined angle by correction processing means and the brushless DC motor is controlled based on information of the corrected electrical angle.

However, according to the above-described conventional apparatus of detecting a position of a rotor of a motor, the magnetic flux generated from the magnetic pole of the rotor is detected as the signal of detecting the position of the magnetic pole in the form of the binary signal by magnetic pole detecting means constituted by the inexpensive Hall sensor of the digital type, based on the signal of detecting the position of the magnetic pole, the edge signal in correspondence with the edge of the magnetic pole is provided and the electrical angle is predicted by counting the interval of the edge signal by the measuring clock. Therefore, in order to predict accurate electrical angle, the correction needs to carry out based on the average speed of information of the edge signal actually provided under the condition of constant acceleration and the time period until the electrical angle is changed by the predetermined angle and therefore, operation processing is complicated and there poses an unresolved problem that robust performance against disturbance is problematic.

Hence, it is an object of the present invention to provide an electrical driving apparatus enabling to detect the position of a rotor of an electric motor with high resolution by using inexpensive magnetic pole detecting means without using an expensive rotary encoder.

According to the present invention, said objective is achieved by the features of claim 1.

Preferred embodiments are laid down in the further subclaims.

Accordingly, in a preferred embodiment by the magnetism detecting means arranged at the stator, the plurality of magnetism detecting signals having the different phases including the analog magnetism detecting signal in, for example, a shape of a sine wave in correspondence with the magnetic fluxes of the magnet poles formed at the rotor, that is, the plurality of analog magnetism detecting signals having the different phases are outputted or the analog magnetism detecting signal and a digital magnetism detecting signal comprising a binary signal having the different phases are outputted and inputted to the rotational position detecting means and the plurality of magnetism detecting signals are compared with each other to thereby continuously detect the rotational position of the rotor.

Further, preferably, there is provided the apparatus of detecting a position of a rotor of a motor according to Claim 1 of the present invention wherein the magnetism detecting means comprises an analog type Hall sensor for outputting the analog magnetism detecting signal in correspondence with the magnetic fluxes of the magnetic poles, and a digital type Hall sensor for outputting a digital magnetism detecting signal comprising a binary signal having a predetermined phase difference, for example, 90° in an electrical angle relative to the analog signal outputted from the analog type Hall sensor in correspondence with the magnetic fluxes of the magnetic poles, wherein the rotational position detecting means detects the rotational position of the rotor based on the analog magnetism detecting signal outputted from the analog type Hall sensor and the digital magnetism detecting signal outputted from the digital type Hall sensor.

According to another preferred aspect of the invention, when only a range of, for example, -90° through 90° is considered, the analog magnetism detecting signal in the shape of the sine wave outputted from the analog type Hall sensor can detect accurate rotational position since an instantaneous value thereof is changed in accordance with the rotational position. However, in a range of 90° through 270°, the individual instantaneous value becomes a value the same as that of the instantaneous value in the range of 90° through -90° and accordingly, when operation processing is carried out by using the instantaneous value, those at 60° and at 120° cannot be discriminated from each other. Therefore, by outputting the digital magnetism detecting signal comprising the binary signal from the digital type Hall sensor having the phase difference of 90° relative to the analog signal of the analog type Hall sensor, by the digital magnetism detecting signal, whether the analog magnetism detecting signal falls in the range of -90° through 90° or the range of 90° through 270° can be determined.

Hereinafter, the present invention is explained in greater detail by means of preferred embodiments thereof in conjunction with the accompanying drawings, wherein:

Fig. 1 is an outline constitution view showing a first embodiment when the invention is applied to a brushless DC motor of an inner rotor type;

Fig. 2 is an explanatory view showing a relationship of arranging the rotor and a stator of Fig. 1;

Fig. 3 is a characteristic diagram showing an output characteristic of an analog type Hall sensor;

Fig. 4 is a waveform diagram provided for explaining operation of detecting a position of a rotor;

Fig. 5 is a flowchart showing an example of a processing of detecting the position of the rotor;

Fig. 6 is an explanatory view similar to Fig. 2 showing a second embodiment of the invention;

Fig. 7 is a waveform diagram provided for explaining operation of detecting a position of a rotor according to the second embodiment;

Fig. 8 is a flowchart showing an example of a processing of detecting the position of the rotor according to the second embodiment; and

Fig. 9 is a waveform diagram showing a magnetic pole detecting signal and a conducting current waveform in a conventional brush DC motor.

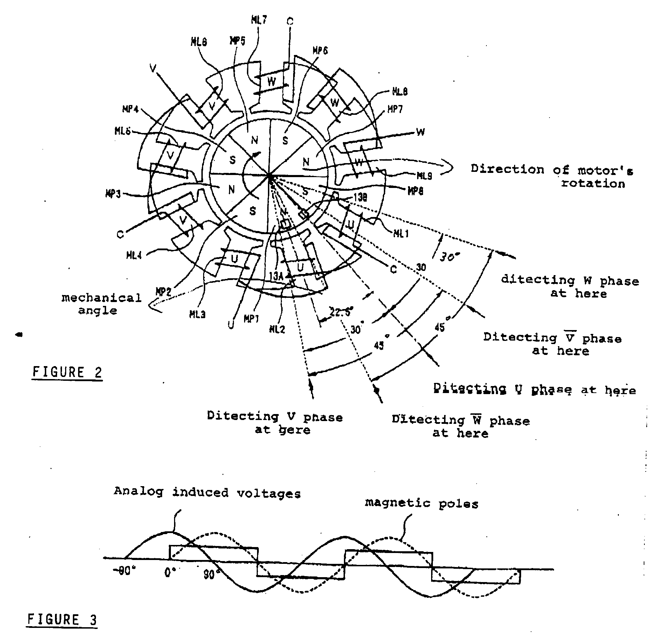

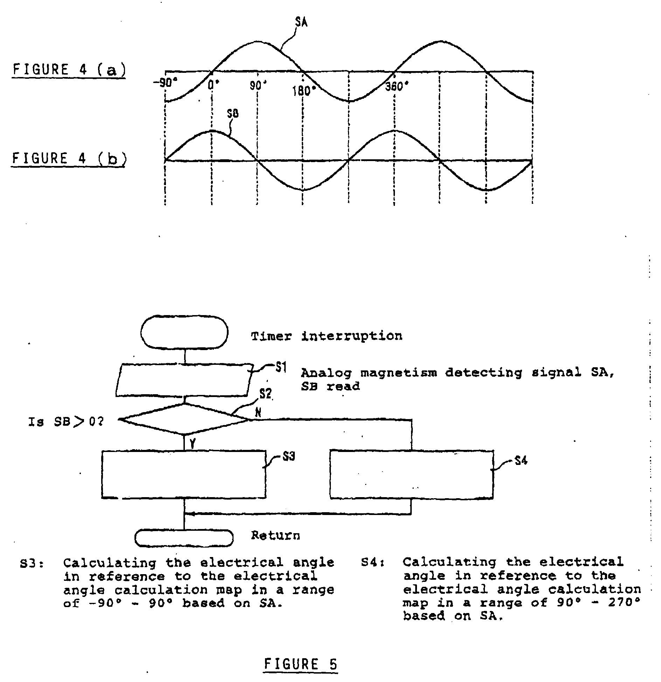

An explanation will be given of embodiments of the invention in reference to the drawings as follows.

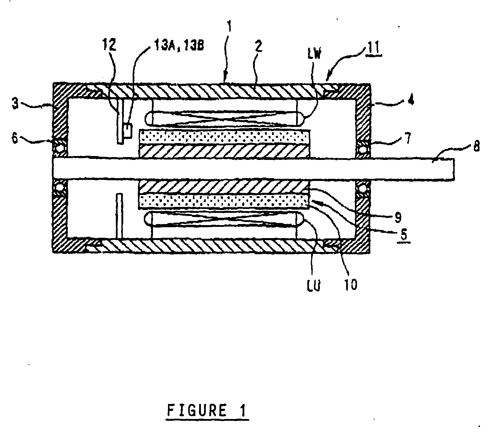

Fig. 1 is a sectional view showing a first embodiment when the invention is applied to a brushless DC motor.
In the drawing, numeral 1 designates a motor case constituted by a stator yoke 2 in a cylindrical shape and bearing brackets 3 and 4 closing both ends thereof and a rotor 5 is supported in the motor case 1 rotatably by ball bearings 6 and 7 arranged at the bearing brackets 3 and 4.
The rotor 5 is constituted by a rotating shaft 8 rotatably supported by the ball bearings 6 and 7, a rotor yoke 9 in a cylindrical shape fitted to the rotating shaft 8 in the motor case 1 and permanent magnets 10 formed at an outer peripheral face of the rotor yoke.
In this case, as shown by Fig. 2, the permanent magnets 10 are constituted by 8 poles of magnetic poles MP1 through MP8 magnetized in N poles and S poles alternately in the circumferential direction.
In the meantime, the stator yoke 2 is arranged with, for example, 9 slots of magnetic legs ML1 through ML9 at positions opposed to the permanent magnets 10 of the rotor 5. As shown by Fig. 2, the stator 11 is constituted by winding three phases of armature coils LU, LV and LW at respectives of the magnetic legs ML1 through ML3, ML4 through ML6 and ML7 through ML9 and according to the armature coils LU, LV and LW, ends C on one side of these are connected to each other to thereby constitute star connection.
Further, the stator yoke 2 is arranged with a support piece 12 extended to a position opposed to an end face of the permanent magnet 10 of the rotor 5 and two analog type Hall sensors 13A and 13B constituting U phase magnetism detecting means are arranged at positions of the support piece 12 opposed to the end face of the permanent magnet 10.
As shown by Fig. 3, the analog type Hall sensors 13A and 13B output, as analog magnetism detecting signals, analog induced voltages in a shape of a sine wave, the phases of which are advanced by 90° in electrical angle relative to magnetic fluxes generated by the magnetic poles MP1 through MP8 constituting the permanent magnets 10 as illustrated by a broken line, and arranged at mechanical angle positions shown by Fig. 2 such that when the rotational direction of the rotor 5 is in the clockwise direction, the phase of an analog magnetism detecting signal SB of the Hall sensor 13B shown by Fig. 4(b) is advanced by 90° in electrical angle relative to that of an analog magnetism detecting signal SA of the Hall sensor 13A shown by Fig. 4(a).
That is, the analog type Hall sensor 13A for detecting a rotor position of U phase is arranged at a central position in the circumferential direction of the central magnetic leg ML2 wound with the U phase armature coil LU of the stator 11 and the analog type Hall sensor 13B is arranged at a position rotated from the central position in the counterclockwise direction by 22.5° in mechanical angle.

When the Hall sensors 13A and 13B are arranged in this way, since the pole number of the rotor 5 is 8, a relationship between an electrical angle $\theta_E$ and a mechanical angle θM can be represented by Equation (1) as follows.

$$\theta_E = 4 \times \theta_M \qquad (1)$$

Further, according to the embodiment, there is provided the inner rotor type brushless motor and when Hall sensors need not to arrange among the slots of the stator 11 as shown by Fig. 1, by arranging the analog type Hall sensor 13A at the central position in the circumferential direction of the central magnetic leg ML2, induced voltage generated by the Hall sensor 13A is advanced by 90° relative to the magnetic flux and the position of the rotor of U phase is detected at the position rotated from the central position in the circumferential direction of the central magnetic leg ML2 in Fig. 2 by mechanical angle of 22.5° (= $\theta_E$ / 4). In the meantime, in order to provide the analog magnetism detecting signal SB which is advanced by 90° relative to the analog magnetism detecting signal SA outputted from the analog type Hall sensor 13A by the analog type Hall sensor 13B, the analog type Hall sensor 13B may be arranged at the position rotated from the analog type Hall sensor 13A in the counterclockwise direction by 22.5° in mechanical angle, that is, the U phase rotor detecting position.

Therefore, according to the first embodiment, by applying three phases alternating current voltages the phases of which are different from each other by 120° to the armature coils LU, LV and LW, when the rotor 5 is rotated, the analog magnetism detecting signals SA and SB the phases of which are shifted from each other by 90° in electrical angle are outputted from two of the analog type Hall sensors 13A and 13B as shown by Figs. 4(a) and 4(b).

When two of the analog magnetism detecting signals SA and SB are A/D-converted and inputted to a microcomputer for controlling to drive the brushless DC motor, the rotor position can accurately be detected in electrical angle by carrying out a rotor position detecting processing shown in Fig. 5.

That is, the rotor position detecting processing is executed as a timer interruption processing at respective predetermined time (for example, 10 msc). First, at step S1, instantaneous values of the analog magnetism detecting signals SA and SB are read. Successively, the operation proceeds to step S2 and determines whether the analog magnetism detecting signal SB is provided with a positive value and in the case of the positive value, it is determined that the analog magnetism detecting signal SA falls in a range of -90° (=270°) through 90° and the operation proceeds to step S3. The timer interruption processing is finished by calculating the electrical angle $\theta_E$ based on the instantaneous value of the analog magnetism detecting signal SA in reference to an electrical angle calculation map previously stored. When the determination result of step S2 is a negative value, it is determined that the analog magnetism detecting signal SA falls in a range of 90° through 270° and the operation proceeds to step S4. The timer interruption processing is finished by calculating the electrical angle $\theta_E$ based on the instantaneous value of the analog magnetism detecting signal SA in reference to the previously stored electrical angle calculation map.

Here, the processing of Fig. 5 corresponds to rotational position detecting means.

In this way, according to the first embodiment, by using two of the analog type Hall sensors 13A and 13B, the analog voltage signals SA and SB having phase difference of 90° are formed, based thereon, the electrical angle $\theta_E$, that is, the rotational position of the rotor 5 is calculated and therefore, the rotational position of the rotor 5 can accurately be detected. Therefore, based on the rotational position of the rotor 5 detected by the analog time Hall sensors 13A and 13B for U phase, the rotational positions of the rotor with regard to V phase and W phase the phases of which are deviated by 120° in electrical angles, that is, 45° in mechanical angles as shown by Fig. 2, can also be detected accurately. Further, the rotor position is detected from output signals of two of the analog type Hall sensors 13A and 13B without carrying out complicated operation processing and therefore, robust performance against disturbance can be promoted.

Further, although according to the above-described first embodiment, an explanation has been given of the case in which the phase of the analog voltage signal SB is advanced relative to the analog voltage signal SA by 90° in electrical angle, the invention is not limited thereto but the phase may be retarded by 90° and in this case, in the processing of Fig. 5, when the determination result at step S2 is SB>0, the operation may proceed to step S4 and in the case of SB≤0, the operation may proceed to step S3.

Further, the analog voltage signal SB outputted from the analog type Hall sensor 13B needs not to be in the shape of a sine wave but may be in the shape of a triangular wave or a trapezoidal wave.

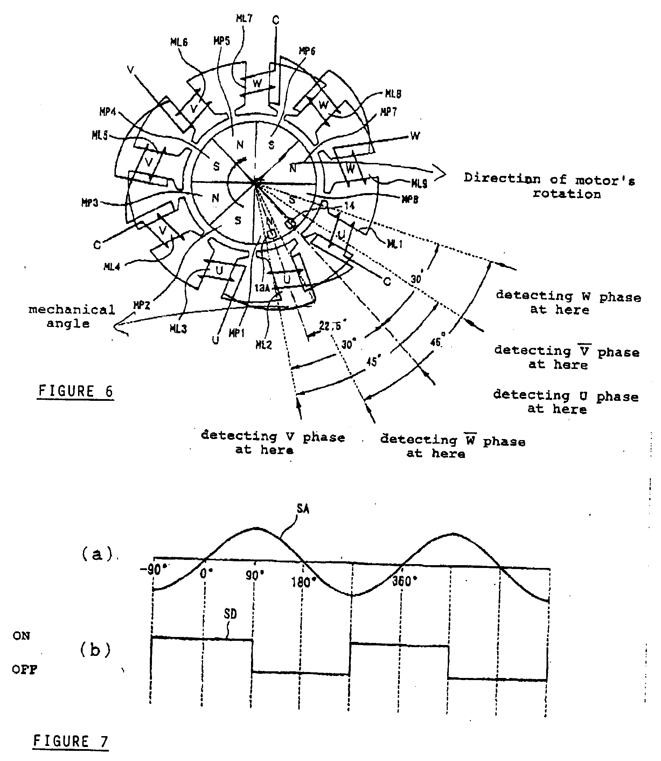

Next, an explanation will be given of a second embodiment of the invention in reference to Fig. 6.

According to the second embodiment, instead of the case of providing two of the analog type Hall sensor 13A and 13B as in the above-described first embodiment, the rotor position is detected by using one analog type Hall sensor and one digital Hall sensor.

That is, according to the second embodiment, as shown by Fig. 6, there is constructed a constitution similar to that of the first embodiment shown by Fig. 2 except that there is applied a digital type Hall sensor 14 for outputting magnetic fluxes generated at the magnetic poles MP1 through MP8 constituting the permanent magnet 10 as digital magnetism detecting signals of a binary signal in place of the analog type Hall sensor 13B, the same notations are attached to portions in correspondence with those in Fig. 2 and a detailed explanation thereof will be omitted.

According to the second embodiment, although as shown by Fig. 7(a) the analog magnetism detecting signal SA similar to that in the first embodiment is outputted from the analog type Hall sensor 13A, as shown by Fig. 7(b), a digital magnetism detecting signal SD comprising a binary signal, the phase of which is advanced by 90° in electrical angle relative to the analog magnetism detecting signal SA, is outputted from the digital type Hall sensor 14.

Therefore, when the digital magnetism detecting signal SD is brought into an ON state, the analog magnetism detecting signal SA falls in a range of -90° through 90° and when the digital magnetism detecting signal SD is brought into an OFF state, the analog magnetism detecting signal SA falls in a range of 90° through 270° and therefore, by inputting the analog magnetism detecting signal SA and the digital magnetism detecting signal SD into the microcomputer for controlling to drive the brushless DC motor and carrying out a rotor position detecting processing shown by Fig. 8, the rotor position can accurately be detected in electrical angle.

That is, the rotor position detecting processing is executed as a timer interruption processing at respective predetermined time (for example, 10 msec). First, instantaneous values of the analog magnetism detecting signal SA and the digital magnetism detecting signal SD are read at step S11. Successively, the operation proceeds to step S12 and determines whether the digital magnetism detecting signal SD is brought into the ON state. In the case of the ON state, it is determined that the analog magnetism detecting signal SA falls in a range of -90° (=270°) through 90° and the operation proceeds to step S13. The timer interruption processing is finished by calculating the electrical angle $\theta_E$ based on the instantaneous value of the analog magnetism detecting signal SA in reference to the electrical angle calculation map previously stored. Further, when the determination result at step S12 indicates the OFF state, it is determined that the analog magnetism detecting signal SA falls in a range of 90° through 270° and the operation proceeds to step S14. The timer interruption processing is finished by calculating the electrical angle $\theta_E$ based on the instantaneous value of the analog magnetism detecting signal SA in reference to the previously stored electrical angle calculation map.

In this case, the processing of Fig. 8 corresponds to the rotational position detecting means.

In this way, also in the second embodiment, the rotor position can accurately be detected by using the analog type Hall sensor 13A and the digital type Hall sensor 14, further, the digital type Hall sensor 14 is inexpensive in comparison with the analog type Hall sensor 13A and therefore, the rotor position detecting apparatus can be fabricated at a low cost in comparison with that in the first embodiment.

Further, although according to the first and the second embodiments, an explanation has been given of the case in which the analog type Hall sensor 13A and the analog type Hall sensor 13B or the digital type Hall sensor 14 are installed at the positions shown by Fig. 2, these may be arranged at positions shifted from each other by the mechanical angle of 90° (electrical angle of 360°) multiplied by an integer. When these sensors are used in inverse signs, the sensors may be arranged at positions shifted from each other by the mechanical angle of 45° (electrical angle of 180°) multiplied by an integer. Further, the positions of installing the analog type Hall sensor 13A and the analog type Hall sensor 13B or the digital type Hall sensor 14 relative to each other are not limited to those having the mechanical angle of 22.5° (electrical angle of 90°) as interval therebetween but may be installed at arbitrary mechanical angle positions and in this case, the phase of the output of either one of the analog type Hall sensor 13A and the analog type Hall sensor 13B or the digital type Hall sensor 14 may be corrected relative to the phase of other to constitute the interval of 90° in electrical angle or electrical angle 90° multiplied by an integer.

Further, although according to the above-described first and second embodiments, an explanation has been given of the case in which the Hall sensors 13A, 13B and 14 are arranged at the end face of the rotor 5 in the axial direction, when the analog type Hall sensor 13A is placed between the slots, since the stator 11 is of 9 slots, a deviation from the center in the circumferential direction of the magnetic leg ML2 to slots on both sides, becomes ±(80+160n) (n=0 through 4)° in electrical angle. The phase of induced voltage of the analog type Hall sensor 13A is advanced by 90° in electrical angle relative to the position of the magnetic pole of the rotor 5 relative to the magnetic leg ML2 and therefore, the deviation in the case of placing the analog type Hall sensor 13A between the slots becomes 90±(80+160n)° in electrical angle and by taking the shift amount into account, the rotor positions relative to centers in the circumferential direction of central magnetic legs of the respective phases of U, V and W phases of the stator 11 can accurately be detected.

Further, although according to the above-described first and second embodiments, an explanation has been given of the case in which the invention is applied to the brushless DC motor of the inner rotor type, the invention is not limited thereto but the invention is applicable to an alternating current motor having a rotor having a plurality of magnetic poles by arbitrary permanent magnets such as a brushless DC motor of an outer rotor type, a brushless DC motor of a flat type or the like.

Furthermore, although according to the above-described first and second embodiments, an explanation has been given of the case in which the Hall sensor is applied as the magnetism detecting means, the invention is not limited thereto but other magnetism detecting sensor for outputting an analog magnetism detecting signal such as a magnetic saturation element is applicable.

Furthermore, although according to the above-described first and second embodiments, an explanation has been given of the case of installing the two Hall sensors 13A and 13B or 14, the invention is not limited thereto but three sets of Hall sensors may be arranged individually for U phase, V phase and W phase.

As has been explained, there is achieved an effect of capable of continuously detecting the rotational position of the rotor without applying separately expensive rotor position detecting means having high resolution such as encoder by outputting the plurality of magnetism detecting signals having the different phases including the analog magnetism detecting signal in, for example, the shape of the sine wave in correspondence with the magnetic fluxes of the magnetic poles formed at the rotor, or outputting the analog magnetism detecting signal and the digital magnetism detecting signal comprising the binary signal having the different phases by the magnetism detecting means arranged at the stator and inputting the signals to the rotational position detecting means and comparing the plurality of magnetism detecting signals.

Further, for example, the range of -90° through 90° and the range of 90° through 270°, which cannot be judged from each other only by the analog magnetism detecting signals in the shape of the sine wave outputted from the analog type Hall sensors, can accurately be judged from each other by referring to the digital magnetism detecting signal having the phase difference of 90° relative to the analog magnetism detecting signal and the rotor position can continuously be detected, further, there is achieved an effect of capable of reducing the cost of a total of the rotor position detecting apparatus since the digital type Hall sensor is inexpensive in comparison with the analog type Hall sensor.

**Claims**

1. Electrical driving apparatus comprising an electric motor having a rotor and a stator and a magnetism and rotational position detecting means for detecting a rotational position of the rotor, said rotor and stator defining a plurality of magnetic poles created by permanent magnets and excitation coils wound on magnetic legs, same being disposed opposite to the permanent magnets, respectively, wherein said magnetism detecting means outputting a plurality of magnetism detecting signals having different phases including at least one analog magnetism detecting signal corresponding to magnetic fluxes of magnetic poles defined by the stator with said rotational position detecting means being adapted to detect the rotational position of the rotor based on a plurality of magnetism detecting signals outputted from that magnetism detecting means.

2. Electrical driving apparatus as claimed in claim 1, wherein the magnetic poles of the rotor are formed by permanent magnets while the magnetic poles of the stator are formed by excitation coils wound on magnetic legs of the stator disposed in transitional opposite positions to the permanent magnets of the rotor.

3. Electrical driving apparatus as claimed in claim 1 or 2, wherein the magnetism detecting means comprising an analog type Hall sensor for outputting an analog magnetism detecting signal corresponding to the magnetic fluxes of the magnetic poles, and a digital type Hall sensor for outputting a digital magnetism detecting signal comprising a binary signal having a predetermined phase difference relative to the analog signal outputted from the analog type Hall sensor according to the magnetic fluxes of the magnetic poles.

4. Electrical driving apparatus as claimed in at least one of the preceding claims 1 to 3, wherein the rotational position detecting means is adapted to detect the rotational position of the rotor based on the analog magnetism detecting signal outputted from the analog type Hall sensor and the digital magnetism detecting signal outputted from the digital type Hall sensor.

5. Electrical driving apparatus as claimed in at least one of the preceding claims 1 to 4, wherein said analog magnetism detecting signal and said digital magnetism detecting signal comprising a binary signal having a phase difference of 90° are inputted into a comparator for discriminating the phase position of the analog signal discriminating whether the analog magnetism detecting signal falls in a range of -90° to 90° or the range of 90° through 270°.

6. Electrical driving apparatus as claimed in at least one of the preceding claims 1 to 5, wherein that electric motor including said rotor position detecting means are applied as a motor generating drive torque to manpower driven but power-assisted vehicles such as a bicycle having assisted-power, a wheelchair having assisted-power, an electrical vehicle such as an electric scooter and hybrid vehicles using both an engine and an electric motor.

7. Electrical driving apparatus as claimed in at least one of the preceding claims 1 to 6, wherein the position of the rotor by the magnetism and rotor position detecting means is detected continuously.

FIGURE 1

FIGURE 2

Direction of motor's
rotation

mechanical
angle

ditecting W phase
at here

Ditecting $\overline{V}$ phase
at here

Ditecting U phase at here

Ditecting V phase
at here

Ditecting $\overline{W}$ phase
at here

Analog induced voltages

magnetic poles

−90° 0° 90°

FIGURE 3

FIGURE 4 (a)

SA

-90°    0°    90°    180°    360°

FIGURE 4 (b)

SB

Timer interruption

S1  Analog magnetism detecting signal SA, SB read

Is SB > 0?    S2    N

Y

S3    S4

Return

S3:  Calculating the electrical angle in reference to the electrical angle calculation map in a range of -90° - 90° based on SA.

S4:  Calculating the electrical angle in reference to the electrical angle calculation map in a range of 90° - 270° based on SA.

FIGURE 5

10

FIGURE 6

mechanical angle

Direction of motor's rotation

detecting W phase at here

detecting $\overline{V}$ phase at here

detecting U phase at here

detecting V phase at here

detecting $\overline{W}$ phase at here

(a)

(b)

ON
OFF

FIGURE 7

Timer interruption

S11 — Analog magnetism detecting signal SA, .
Digital magnetism detecting signal SD
read

S12

Is SD into
the ON state?   N

Y

S13

S14

FIGURE 8

Return

S13: Calculating the
electrical angle
in reference to the
electrical angle
calculation map in a
range of -90° - 90°
based on SA.

S14: Calculating the
electrical angle in
reference to the
electrical angle
calculation map in a
range of 90° - 270°
based on SA.

1   2   3   4   5   6

FIGURE 9